# FASCICULE DE BREVET EUROPEEN

(11) **EP 3 198 215 B1**
(45) Date de publication et mention de la délivrance du brevet: **25.12.2019**
(21) Numéro de dépôt: 15767166.0
(22) Date de dépôt: 24.09.2015
(51) Int. Cl.: F28F 27/02, F24F 12/00, F28D 9/00, F28D 21/00

(54) **SYSTEME D'ECHANGEUR THERMIQUE A PERFORMANCES ET COMPACITE AMELIOREES**
WÄRMETAUSCHERSYSTEM MIT VERBESSERTER LEISTUNG UND VERBESSERTER KOMPAKTHEIT
HEAT EXCHANGER SYSTEM WITH IMPROVED PERFORMANCE AND IMPROVED COMPACTNESS

(30) Priorité: 25.09.2014 FR 1459049
(43) Date de publication de la demande: 02.08.2017
(73) Titulaire: Commissariat à l'Énergie Atomique et aux Énergies Alternatives, 75015 Paris (FR)
(72) Inventeur: MARIOTTO, Mathieu, F-73290 La Motte-servolex (FR)
(74) Mandataire: Brevalex
(86) Numéro de dépôt international: PCT/EP2015/071944
(87) Numéro de publication internationale: WO 2016/046303

(56) Documents cités:
- DE-A1-102011 002 605
- US-A1- 2006 199 510

## Description

L'invention se rapporte au domaine des systèmes d'échangeur thermique destinés à être intégrés dans des parois de bâtiments, en particulier des parois de rénovation pour bâtiments de l'habitat ou du tertiaire, selon la revendication 1.

Pour l'application privilégiée de rénovation du parc ancien d'habitations, il est préférentiellement employé des systèmes intégrant des échangeurs à double flux d'air, du type permettant un transfert thermique ainsi qu'un transfert d'humidité entre les deux flux d'air traversant l'échangeur. Un tel échangeur assurant ce double transfert est également couramment dénommé « échangeur total » ou « échangeur enthalpique ». Ce type d'échangeur garantit un transfert thermique entre le flux d'air vicié et le flux d'air neuf, mais également un transfert d'humidité entre ces deux flux, du milieu le plus humide vers le milieu le plus sec.

Les systèmes d'échangeur pour paroi de bâtiment doivent répondre à un cahier des charges conséquent, comprenant notamment des exigences en matière de compacité, de masse, de coût, de performances énergétiques, ou encore de capacité à assurer les besoins en ventilation d'air dans plusieurs configurations climatiques.

Plusieurs systèmes d'échangeur ont été développés ces dernières années, mais il subsiste un besoin d'optimisation, en particulier en termes de compacité et de performances énergétiques. Un tel système est notamment montré dans le document US2006199510.

Pour répondre à ce besoin, l'invention a pour objet un système d'échangeur thermique destiné à être intégré dans une paroi d'un bâtiment, le système comprenant un boîtier extérieur et un échangeur à double flux d'air et à contre-courant logé dans ledit boîtier, l'échangeur comprenant une zone d'admission d'air neuf, une zone de distribution d'air neuf, une zone d'admission d'air vicié et une zone d'évacuation d'air vicié, la zone d'admission d'air neuf et la zone d'évacuation d'air vicié se situant à une première extrémité de l'échangeur selon une première direction du système, en étant décalées l'une de l'autre selon une seconde direction du système orthogonale à la première direction, et la zone d'admission d'air vicié ainsi que la zone de distribution d'air neuf se situant à une seconde extrémité de l'échangeur selon la première direction, en étant également décalées l'une de l'autre selon la seconde direction.

Selon l'invention, le boîtier extérieur comporte un premier et un second capots de fermeture opposés selon une troisième direction du système, la troisième direction étant orthogonale aux première et seconde directions.

De plus, le boîtier extérieur comporte une cavité d'admission d'air vicié délimitée en partie par la zone d'admission d'air vicié, une cavité d'admission d'air neuf délimitée en partie par la zone d'admission d'air neuf, une cavité de distribution d'air neuf délimitée en partie par la zone de distribution d'air neuf, et une cavité d'évacuation d'air vicié délimitée en partie par la zone d'évacuation d'air vicié.

En outre, le premier capot de fermeture comprend une ouverture pour l'admission d'air vicié débouchant dans la cavité d'admission d'air vicié ainsi qu'une ouverture pour la distribution d'air neuf communiquant avec la cavité de distribution d'air neuf, le second capot de fermeture comprenant une ouverture pour l'admission d'air neuf débouchant dans la cavité d'admission d'air neuf ainsi qu'une ouverture pour l'évacuation d'air vicié débouchant dans la cavité d'évacuation d'air vicié.

Le boîtier extérieur comporte également, à sa périphérie, un premier canal d'air s'étendant autour de l'échangeur entre la cavité d'admission d'air vicié et la cavité d'évacuation d'air vicié dans laquelle il débouche, le premier canal d'air contournant extérieurement la cavité d'admission d'air neuf et étant séparé de la cavité d'admission d'air vicié par des moyens commandables de dérivation de l'air situé dans cette même cavité.

Enfin, le système d'échangeur thermique présente une épaisseur, selon la troisième direction, inférieure ou égale à 20 cm, et plus préférentiellement de l'ordre de 15 cm.

Ainsi, lorsque les moyens commandables de dérivation sont fermés, l'air enfermé dans le premier canal d'air remplit une fonction de volume d'air mort dont la température est en équilibre avec l'environnement périphérique de système d'échangeur selon l'invention. Il constitue alors une isolation périphérique qui protège l'échangeur. Cela limite les risques potentiels de dégradation de l'énergie échangée au sein de l'échangeur ainsi protégé. En d'autres termes, l'invention permet de réduire astucieusement les risques d'apparition de surchauffe ou de points froids, susceptibles d'être créés à la périphérie du système d'échangeur en raison des conditions climatiques extérieures et/ou de la présence d'éléments environnants perturbateurs, également intégrés dans la paroi à proximité du système d'échangeur. En particulier, l'absence de points froids réduit les risques de condensation au sein de l'échangeur.

Aussi, le premier canal d'air participe à la création d'une zone tampon périphérique quasi-adiabatique, renforçant les performances énergétiques globales du système d'échangeur. Cette zone tampon est d'ailleurs avantageusement réalisée avec de l'air vicié, qui confère de meilleures performances qu'avec de l'air neuf. En effet, l'air vicié permet d'obtenir un meilleur équilibre thermique avec la paroi, c'est-à-dire avec le mur dans lequel est intégré le système d'échangeur. Il en résulte une meilleure isolation thermique en évitant des gradients thermiques élevés.

Mais l'invention est d'autant plus avantageuse en ce que ce premier canal d'air est intégré à un système de dérivation d'air vicié, activé lorsque l'air extérieur neuf est plus froid que l'air intérieur, en été. Il suffit en effet d'ouvrir les moyens de dérivation pour que l'air vicié emprunte naturellement le premier canal d'air avant de rejoindre la cavité d'évacuation d'air vicié. Dans ce cas de figure, seul l'air neuf traverse l'échangeur, au sein duquel il peut être filtré.

Le premier canal d'air permet ainsi de conférer plusieurs fonctionnalités au système d'échangeur selon l'invention, tout en offrant une compacité satisfaisante.

En outre, la mise en place des ouvertures sur les capots de fermeture du boîtier extérieur permet d'approcher au plus près ces ouvertures des espaces dans lesquels l'air doit être introduit / extrait, lorsque ces capots sont agencés parallèlement à la paroi dans laquelle est intégré le système selon l'invention, et orthogonalement à la troisième direction. En effet, grâce à la faible épaisseur du système d'échangeur dans la troisième direction, cet échangeur s'avère parfaitement adapté pour une implantation dans une paroi de bâtiment. Cette spécificité conduit à simplifier la conception, la mise en place et la maintenance de système d'échangeur, en particulier en raison de l'absence de canalisations additionnelles cheminant à la périphérie du système. Cette absence de canalisations non désirées contribue également à réduire les risques de pertes énergétiques et les risques de fuites aérauliques.

L'invention présente par ailleurs au moins l'une des caractéristiques optionnelles suivantes, prises isolément ou en combinaison.

Le boîtier extérieur comporte, à sa périphérie, un second canal d'air s'étendant selon la première direction le long de l'échangeur, un organe d'obturation séparant la cavité d'évacuation d'air vicié d'une première extrémité du second canal. Ce second canal peut être fonctionnalisé de deux manières différentes, qui seront exposées ci-après. Dans tous les cas, il contribue à la création de la zone tampon périphérique quasi-adiabatique protégeant l'échangeur, et renforçant les performances énergétiques globales du système.

Selon un premier mode de réalisation préféré de l'invention, une seconde extrémité du second canal d'air débouche dans la cavité de distribution d'air neuf, et l'ouverture pour la distribution d'air neuf est pratiquée sur le premier capot de fermeture du boîtier extérieur en débouchant au niveau de la première extrémité du second canal d'air, afin que l'ouverture pour la distribution d'air neuf et l'ouverture pour l'admission d'air vicié soient écartées l'une de l'autre, selon ladite première direction. Dans cette première conception, le second canal est ainsi emprunté par l'air neuf sortant de l'échangeur, avant son introduction dans l'espace à ventiler. La température de l'air circulant à travers ce second canal est ainsi théoriquement proche de la température d'équilibre de la paroi intégrant le système. Cela permet, localement au niveau de ce second canal d'air, l'obtention d'une barrière périphérique protégeant convenablement l'échangeur d'éventuelles agressions thermiques préjudiciables.

De plus, du fait que l'ouverture pour la distribution d'air neuf et l'ouverture pour l'admission d'air vicié sont écartées l'une de l'autre, selon la première direction qui est préférentiellement la direction de la hauteur de la paroi, le risque de court-circuitage entre les deux flux associés à ces ouvertures est largement minimisé.

Selon un second mode de réalisation préféré de l'invention, un autre organe d'obturation, par exemple une simple paroi, sépare la cavité de distribution d'air neuf d'une seconde extrémité du second canal, et l'ouverture pour la distribution d'air neuf est pratiquée sur le premier capot de fermeture du boîtier extérieur en débouchant dans la cavité de distribution d'air neuf. Dans cette seconde conception, le second canal est fermé à ses deux extrémités et l'air qui y est enfermé remplit ainsi la fonction de volume mort tampon. Il constitue alors une isolation périphérique qui protège l'échangeur, puisque ce volume d'air se met naturellement, par convection naturelle, en équilibre thermique avec la température de la paroi. Cela limite les risques potentiels de dégradation de l'énergie échangée au sein de l'échangeur, en réduisant donc astucieusement les risques d'apparition de surchauffe ou de points froids susceptibles d'être créés à la périphérie du système d'échangeur. Aussi, le second canal d'air participe à la création de la zone tampon périphérique quasi-adiabatique, renforçant les performances énergétiques globales du système d'échangeur.

De préférence, le boîtier extérieur présente une forme globale de parallélépipède rectangle, même si d'autres formes analogues pourraient être retenues, sans sortir du cadre de l'invention.

De préférence, la première direction correspond à une direction de la hauteur de la paroi. Alternativement, il pourrait par exemple s'agir de la direction horizontale.

De préférence, l'échangeur présente une forme globale de prisme hexagonal, régulier ou irrégulier, quatre des six faces rectangulaires du prisme constituant respectivement la zone d'admission d'air neuf, la zone de distribution d'air neuf, la zone d'admission d'air vicié et la zone d'évacuation d'air vicié, et l'échangeur est préférentiellement agencé dans le boîtier extérieur de façon à ce que les deux autres faces rectangulaires du prisme soient parallèles à ladite première direction du système.

De préférence, chacune des cavité d'admission d'air vicié, cavité d'admission d'air neuf, cavité de distribution d'air neuf et cavité d'évacuation d'air vicié s'étendent sur sensiblement toute l'épaisseur du système selon la troisième direction, en étant délimitées par lesdits premier et second capots de fermeture.

De préférence, l'échangeur est un échangeur enthalpique permettant un transfert thermique et un transfert d'humidité entre les deux flux d'air. Alternativement, il pourrait s'agir d'un simple échangeur thermique, sans échange d'humidité.

De préférence, le système d'échangeur comporte des tubes agencés orthogonalement au premier et second capots de fermeture et raccordés respectivement sur l'ouverture pour l'admission d'air vicié, l'ouverture pour la distribution d'air neuf, l'ouverture pour l'admission d'air neuf ainsi que l'ouverture pour l'évacuation d'air vicié.

Comme évoqué précédemment, cette particularité évite l'emploi de canalisations cheminant à la périphérie du système, contribuant ainsi à la réduction des risques de pertes énergétiques et de fuites aérauliques.

De préférence, l'échangeur est un échangeur à plaques ou à plaques et à ailettes. De manière générale, tout type d'échangeur connu de l'homme du métier peut être employé dans la présente invention.

L'invention a également pour objet une paroi de bâtiment comprenant au moins un système d'échangeur tel que décrit ci-dessus.

Cette paroi comprend de préférence une cloison extérieure et une cloison intérieure entre lesquelles est défini un espace dans lequel est logé ledit au moins un système d'échangeur, une couche d'isolation thermique étant préférentiellement interposée entre la cloison intérieure et le premier capot du système d'échangeur, et entre la cloison extérieure et le second capot de ce même système.

Enfin, l'invention a aussi pour objet un bâtiment comprenant au moins une paroi telle que décrite ci-dessus, cette paroi étant préférentiellement une paroi de rénovation. Néanmoins, l'invention s'applique également à une paroi de bâtiment neuf, généralement appelé « mur ».

D'autres avantages et caractéristiques de l'invention apparaîtront dans la description détaillée non limitative ci-dessous.

Cette description sera faite au regard des dessins annexés parmi lesquels :
- la figure 1 représente une vue schématique de face d'un bâtiment comprenant une paroi équipée d'un système d'échangeur selon l'invention ;
- la figure 2 représente une vue agrandie et plus détaillée d'une partie de la paroi montrée sur la figure précédente, et intégrant le système d'échangeur selon l'invention ;
- la figure 3 représente une vue éclatée en perspective du système d'échangeur montré sur les figures précédentes ;
- la figure 4 représente une vue plus détaillée en perspective du système d'échangeur se présentant sous la forme d'un premier mode de réalisation préféré de l'invention, l'un des capots de fermeture du système ayant été retiré pour laisser apparents les composants intérieurs de ce système, qui est représenté dans une première configuration de fonctionnement ;
- la figure 5 montre une vue analogue à celle de la figure 4, avec le système d'échangeur se présentant dans une seconde configuration de fonctionnement ;
- la figure 6 représente une vue en perspective du système d'échangeur, selon un second mode de réalisation préféré de l'invention ;
- la figure 7 représente une vue en perspective du système d'échangeur, selon un troisième mode de réalisation préféré de l'invention ;
- la figure 8 représente une vue en perspective d'une colonne de distribution et de collecte d'air destinée à coopérer avec le système d'échangeur montré sur la figure précédente ;
- les figures 9a et 9b montrent des vues en perspective, selon différents angles de vue, de la coopération entre la colonne de distribution et de collecte d'air, et le système d'échangeur.

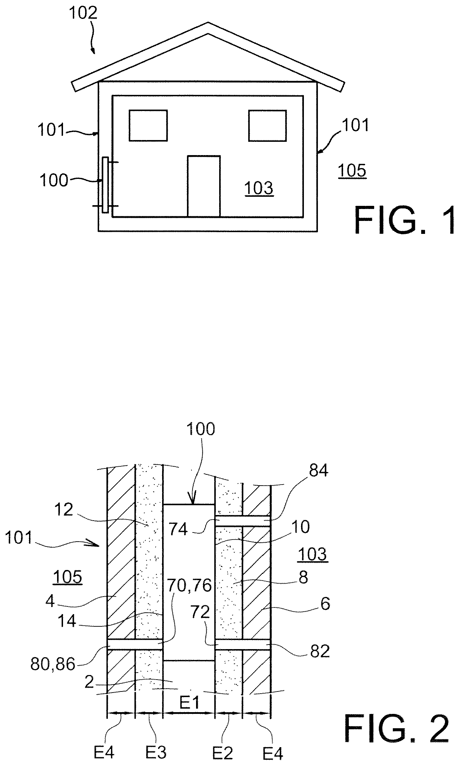

En référence tout d'abord à la figure 1, il est représenté un bâtiment 102, du type bâtiment domestique, collectif ou tertiaire. Ce bâtiment est équipé de parois verticales 101 dont au moins l'une est équipée d'un système d'échangeur 100 selon l'invention. La paroi peut indifféremment être un mur neuf, ou bien une paroi de rénovation destinée à la rénovation énergétique du parc ancien d'habitations. C'est cette seconde application qui sera décrite ci-après.

Le système 100, intégré à la paroi 101, remplit ici la fonction de récupération énergétique sur la ventilation des bâtiments. Il permet un transfert énergétique entre l'air situé dans le volume intérieur 103 du bâtiment, et l'air situé dans l'espace extérieur 105 entourant ce même bâtiment. Il est également dénommé système de traitement et de conditionnement d'air.

En référence à la figure 2, il est montré que le système d'échangeur 100 est intégré à la paroi 101 en étant agencé dans un espace intérieur 2 de celle-ci, délimité entre une cloison extérieure 4 et une cloison intérieure 6 parallèles et verticales. De plus, une couche d'isolation thermique 8 est placée dans l'espace 2 en étant interposée entre la cloison intérieure 6 et un premier capot 10 du système d'échangeur, de même qu'une couche d'isolation thermique 12 est placée dans l'espace 2 en étant interposée entre la cloison extérieure 4 et un second capot 14 de ce système.

Le système d'échangeur 100, qui sera détaillé ci-après, présente une épaisseur E1 de l'ordre de 15 cm. Les couches 8, 12 présentent chacune une épaisseur E2, E3 de l'ordre de 5 à 8 cm, les deux épaisseurs pouvant être différentes. Ces couches 8, 12 sont réalisées dans des matériaux conventionnels, comme de la laine de roche, etc. Les cloisons intérieure et extérieure 4, 6 sont de préférence réalisées dans des matériaux usuels de construction, du type béton, brique, bois, acier, torchis, plâtre, polymères, ou combinaisons et/ou dérivés de ceux-ci. De plus, les cloisons présentent chacune une épaisseur E4 de l'ordre de 1 à 8 cm.

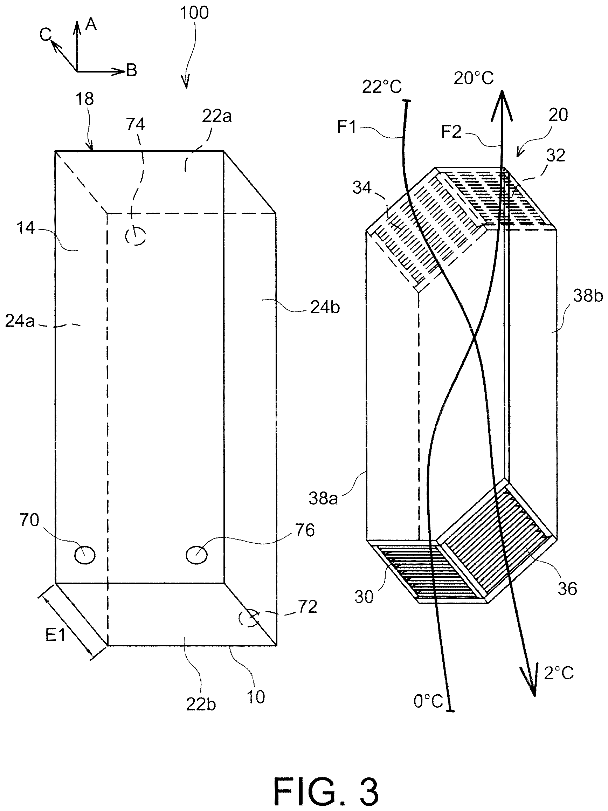

En référence à présent à la figure 3, il est montré que le système d'échangeur 100 est essentiellement composé d'un boîtier extérieur 18 et d'un échangeur 20 destiné à être logé dans le boîtier. Ce dernier présente une forme globale de parallélépipède rectangle. Sa plus grande dimension s'étend selon une première direction A du système, correspondant à la direction de la hauteur de la paroi 101 lorsque le système 100 est intégré à celle-ci. La largeur du boîtier 18 s'étend selon une seconde direction B du système, correspondant à la direction horizontale lorsque ce système 100 est intégré à la paroi. La première direction A est ainsi orthogonale à la seconde direction B. Enfin, l'épaisseur E1 du boîtier s'étend selon une troisième direction C également horizontale, et orthogonale aux deux autres directions A et B.

Le boîtier extérieur 18 comporte les deux capots de fermeture 10, 14, agencés dans des plans AB et décalés l'un de l'autre selon la direction C, orthogonale à ces deux capots 10, 14. D'autre part, le boîtier comporte quatre faces périphériques, parmi lesquelles deux faces opposées 22a, 22b espacées selon la direction A et deux faces opposées 24a, 24b espacées selon la direction B.

L'échangeur 20 est du type à contre-courant et à double flux d'air. Il présente une forme conventionnelle, par exemple en adoptant une conception dite à plaques ou à plaques et à ailettes. Ici, l'échangeur 20 garantit un transfert thermique entre le flux d'air vicié A sortant du bâtiment 102, et le flux d'air neuf B entrant dans ce même bâtiment. En d'autres termes, en plus de renouveler l'air du bâtiment 102, le système 100, grâce à son échangeur de chaleur 20, permet de récupérer la chaleur ou la fraîcheur contenue dans l'air vicié A évacué du logement, et de la fournir au flux d'air neuf entrant B. Le système 100 permet donc d'éviter le gâchis d'énergie pour le chauffage ou la climatisation du bâtiment 102.

A titre d'exemple, le flux d'air vicié A peut présenter une température de 22°C avant de sortir du bâtiment, et le flux d'air neuf B peut présenter une température de 0°C avant d'entrer dans le bâtiment. Après transfert thermique dans l'échangeur, le flux F2 peut atteindre 20°C en sortant de l'échangeur et en entrant dans le bâtiment, et le flux F1 peut être refroidi à une température de 2°C en sortant de l'échangeur et du bâtiment. Dans ce cas de figure, en mode chauffage, l'air entrant est froid et sec, et l'échangeur permet d'humidifier et de préchauffer cet air sec entrant à des conditions de confort thermique acceptables. Dans le même temps, l'air vicié se refroidit et se décharge d'une partie de son humidité.

Néanmoins, d'autres modes de fonctionnement sont possibles. Tout d'abord, en mode climatisation avec l'air entrant chaud et humide, l'échangeur permet de déshumidifier et de rafraichir cet air entrant à des conditions de confort thermique acceptables. L'air vicié se réchauffe et se charge d'humidité. En outre, en mode climatisation avec l'air entrant chaud et sec, l'échangeur permet d'humidifier et de rafraichir l'air entrant à des conditions de confort thermique acceptables. En effet, l'air vicié se réchauffe et se décharge ici d'une partie de son humidité.

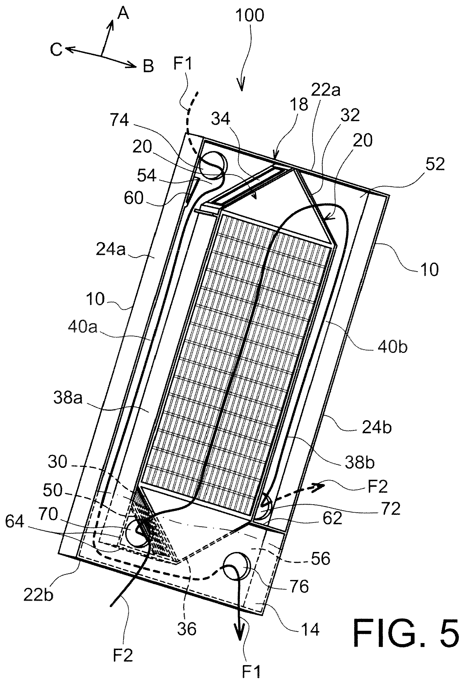

Un fonctionnement en mode de simple ventilation est également possible, comme cela sera détaillé en référence à la figure 5.

Quelle que soit la configuration de fonctionnement adoptée, le système 100 peut être complété par des ventilateurs (non représentés) pour permettre la circulation des flux F1 et F2. Dans ce cas, les ventilateurs sont alors préférentiellement agencés en dehors de la paroi 101. Une autre possibilité préférée réside dans l'intégration des ventilateurs dans les cavités d'admission des flux, ce qui procure par ailleurs un avantage acoustique. Ils sont généralement associés à des filtres.

Comme évoqué ci-dessus, l'échangeur 20 est donc également conçu pour assurer un transfert d'humidité entre ces deux flux F1 et F2, du milieu le plus humide vers le milieu le plus sec. Cet échangeur 20 est donc qualifié d'échangeur total ou encore d'échangeur enthalpique.

L'échangeur 20, formant le cœur du système 100, présente une forme globale de prisme hexagonal, de préférence irrégulier dans la mesure où la base hexagonale ne présente pas six côtés de longueurs identiques. La base hexagonale s'inscrit dans un plan AB, et le prisme s'étend selon la direction C.

Le prisme comporte six faces rectangulaires périphériques. Quatre de ses six faces rectangulaires constituent respectivement une zone d'admission d'air neuf 30, une zone de distribution d'air neuf 32, une zone d'admission d'air vicié 34 et une zone d'évacuation d'air vicié 36. Les zones 32, 34 sont agencées en partie haute du prisme, tandis que les zones 30, 36 sont agencées en partie basse. Entre les deux couples de zones précitées, les deux autres faces rectangulaires 38a, 38b du prisme sont fermées et agencées de manière opposée, parallèlement à la première direction A, dans des plans AC.

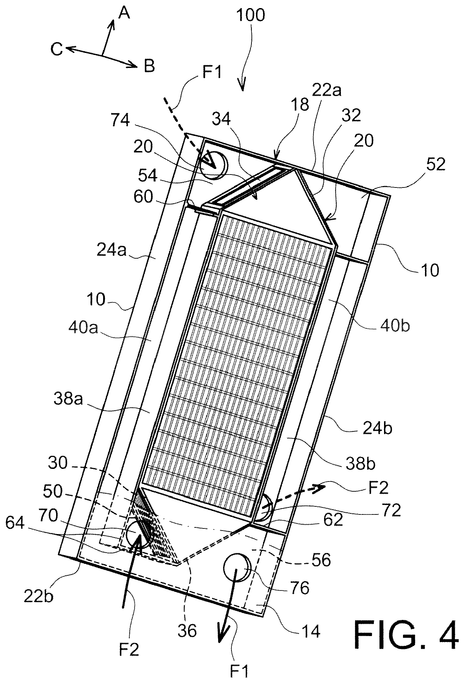

En outre, les deux bases hexagonales, fermant le prisme à ses extrémités opposées selon la direction C, sont destinées à être respectivement en contact plan avec les deux capots de fermeture 10, 14 du boîtier extérieur, lorsque l'échangeur est logé dans ce dernier. En revanche, les deux faces rectangulaires 38a, 38b du prisme sont destinées à être placées respectivement à distance et en regard des faces 24a, 24b, comme cela sera décrit en référence à la figure 4.

Sur cette figure, il est montré que l'arête de l'échangeur 20 qui relie les deux zones 32, 34 est en appui intérieur sur la face périphérique 22a du boîtier, de préférence sur le milieu de cette face. L'arête de l'échangeur 20 qui relie les deux zones 30, 36 est quant à elle en regard et à proximité de l'autre face périphérique 22b du boîtier, également de préférence en regard du milieu de cette face 22b. L'écartement entre ces deux arêtes du prisme, selon la direction A, est donc légèrement inférieur à la longueur totale du système 100 selon cette même direction. Par ailleurs, dans cette disposition, les faces parallèles et en regard 24a, 38a forment une partie d'un premier canal d'air 40a situé à la périphérie du système 100, tandis que les faces parallèles et en regard 24b, 38b forment un second canal d'air 40b également situé à la périphérie du système, à l'opposé du premier canal 40a.

Comme évoqué précédemment, la zone d'admission d'air neuf 30 et la zone d'évacuation d'air vicié 36 se situent à une extrémité basse de l'échangeur 20 selon la direction A, et sont décalées l'une de l'autre selon la direction B. De manière analogue, la zone de distribution d'air neuf 32 et la zone d'admission d'air vicié 34 se situent à l'extrémité haute de l'échangeur selon la direction A, tout en étant également décalées l'une de l'autre selon la direction B. Chacune de ces zones 30, 32, 34, 36 participe à la délimitation d'une cavité dans laquelle l'air transite avant d'être introduit ou après avoir été extrait de l'échangeur 20. Chacune de ces cavités, qui seront détaillées ci-dessous, s'étendent selon la direction C sur une épaisseur sensiblement identique à l'épaisseur totale E1 du système. En effet, ces cavités sont fermées selon la direction C par les deux capots de fermeture 10, 14 du boîtier.

Il s'agit tout d'abord d'une cavité d'admission d'air vicié 54 délimitée par la zone 34, la face 22a, la face 24a et par des moyens commandables 60 de dérivation de l'air situé dans cette cavité 54. Celle-ci se trouve au niveau d'une partie d'extrémité latérale haute du système 100. Le premier capot 10 présente une ouverture 74 pour l'admission d'air vicié débouchant dans la cavité 54. Lorsque le système 100 est implanté dans la paroi tel que cela est montré sur la figure 2, l'ouverture 74 se trouve ainsi en regard de la cloison intérieure 6, et un tube 84 est raccordé à cette ouverture 74 en traversant la cloison 6 et la couche d'isolation 8 jusqu'à déboucher dans le volume intérieur 103 du bâtiment. Le tube 84 est préférentiellement agencé orthogonalement au capot 10, ce qui permet de réduire sa longueur pour atteindre le volume intérieur 103, et réduire les risques de pertes énergétiques et de fuites aérauliques. Cela simplifie par ailleurs l'installation et la maintenance.

Il s'agit par ailleurs d'une cavité d'évacuation d'air vicié 56 délimitée par la zone 36, la face 22b, la face 24b, et un organe d'obturation 62 reliant les faces 22a, 22b au niveau de la jonction entre la face 22 et la zone d'évacuation d'air vicié 36. L'organe d'obturation 62 sépare ainsi la cavité 56 d'une première extrémité du second canal 40b, cheminant à la périphérie du système 100 selon la direction A. La cavité 56 se trouve au niveau d'une partie d'extrémité latérale basse du système 100. Le second capot 14 présente une ouverture 76 (visible sur les figures 2 et 3) pour l'évacuation d'air vicié, débouchant dans la cavité 56. Lorsque le système 100 est implanté dans la paroi tel que cela est montré sur la figure 2, l'ouverture 76 se trouve ainsi en regard de la cloison extérieure 4, et un tube 86 est raccordé à cette ouverture 76 en traversant la cloison 4 et la couche d'isolation 12 jusqu'à déboucher dans le volume 105 extérieur au bâtiment. Le tube 86 est aussi préférentiellement agencé orthogonalement au capot 14.

Il s'agit aussi d'une cavité de distribution d'air neuf 52 délimitée par la zone 32, la face 22a et la face 24b. Cette cavité 52 se trouve au niveau d'une partie d'extrémité latérale haute du système 100, latéralement opposée à la cavité 54 selon la direction B. A sa seconde extrémité selon la direction A, le second canal d'air 40b débouche dans cette cavité 52. De plus, le premier capot 10 présente une ouverture 72 pour l'admission d'air vicié débouchant dans le second canal, au niveau de sa première extrémité à proximité de l'organe d'obturation 62. Lorsque le système 100 est implanté dans la paroi tel que cela est montré sur la figure 2, l'ouverture 72 se trouve ainsi en regard de la cloison intérieure 6, et un tube 82 est raccordé à cette ouverture 72 en traversant la cloison 6 et la couche d'isolation 8 jusqu'à déboucher dans le volume intérieur 103 du bâtiment. Ici aussi, le tube 82 est préférentiellement agencé orthogonalement au capot 10.

L'ouverture d'admission d'air vicié 74 et l'ouverture de distribution d'air neuf 72 sont ainsi écartées l'une de l'autre selon la direction A de la hauteur, ce qui évite un court-circuit entre les deux flux F1 et F2. En effet, le flux d'air vicié plus chaud aura naturellement tendance à emprunter le tube 84 et l'ouverture 74 située plus haut que le tube 82 et l'ouverture 72, dédiés au passage du flux d'air neuf F2.

Il s'agit enfin d'une quatrième cavité, dite cavité d'admission d'air neuf 50, délimitée en partie par la zone 30. Elle est également délimitée par deux organes 64, l'un prolongeant la face 38a et l'autre disposé à 90° par rapport au premier, de manière à le relier à l'arête de jonction entre les zones 30, 36 de l'échangeur. Cette cavité 50 est donc la seule des quatre cavités qui n'est pas délimitée par les faces périphériques du boîtier 18, en se situant à distance des faces 24a, 22b. La cavité 50 se trouve néanmoins à proximité d'une partie d'extrémité latérale basse du système 100, latéralement opposée à la cavité 56. Le second capot 14 présente une ouverture 70 (visible sur les figures 2 et 3) pour l'admission d'air neuf, débouchant dans la cavité 50. Lorsque le système 100 est implanté dans la paroi tel que cela est montré sur la figure 2, l'ouverture 70 se trouve ainsi en regard de la cloison extérieure 4, et un tube 80 est raccordé à cette ouverture 70 en traversant la cloison 4 et la couche d'isolation 12 jusqu'à déboucher dans le volume 105 extérieur au bâtiment. Le tube 80 est aussi préférentiellement agencé orthogonalement au capot 14.

La mise en retrait de la cavité d'admission d'air neuf 50 permet au premier canal d'air 40a de s'étendre à la périphérie du système 100, autour de l'échangeur 20 entre la cavité d'admission d'air vicié 54 et la cavité d'évacuation d'air vicié 56. En effet, en partant des moyens commandables de dérivation 60, le canal d'air 40a s'étend d'abord selon la direction A le long de la face 24a du boîtier, puis contourne extérieurement cette cavité d'admission d'air neuf 50 en longeant la face 22a. Les organes 64 participent donc également à la délimitation du premier canal d'air 40a, qui débouche à son extrémité basse dans la cavité d'évacuation d'air vicié 56.

La figure 4 montre le système d'échangeur 100 selon une configuration de fonctionnement en mode chauffage, préférentiellement retenue en hiver. Dans cette configuration, les moyens de dérivation 60 sont fermés et interdisent la communication d'air entre la cavité d'admission d'air vicié 54 et le premier canal 40a. De ce fait, le flux d'air vicié F1 entrant dans le système 100 par le tube 84 pénètre dans la cavité 54, la zone 34, le cœur de l'échangeur 20, la zone 36, la cavité d'éjection d'air vicié 56 puis le tube 86. A cet égard, il est noté que le flux F1 est forcé à s'échapper de la cavité 54 par l'ouverture d'évacuation d'air vicié 76, et non par le canal 40a déjà rempli d'air et fermé à son extrémité opposé. Le flux d'air neuf F2 entre quant à lui dans le système 100 par le tube 80, avant de pénétrer dans la cavité 50 et à travers la zone 30. Il chemine ensuite à travers le cœur de l'échangeur 20 pour en sortir par la zone 32, à partir de laquelle il rejoint la cavité 52 puis le second canal d'air 40b, avant de s'échapper par l'ouverture 72 et le tube 82 associé, en direction de l'espace intérieur 103.

Avec cette conception, le premier canal d'air 40a remplit une fonction de volume d'air mort dont la température est en équilibre avec l'environnement périphérique de système d'échangeur. Il participe donc avantageusement à la création d'une zone tampon périphérique quasi-adiabatique, renforçant les performances énergétiques globales du système d'échangeur. Cette zone périphérique quasi-adiabatique est observée tout autour du système 100, non seulement avec le premier canal d'air précité, mais également avec le second canal d'air 40b remplissant une fonction similaire, et aussi avec l'air transitant par les cavités 52, 54, 56.

La figure 5 montre le système 100 dans une autre configuration de fonctionnement, permettant une simple ventilation, sans échange thermique. Cette configuration est préférentiellement adoptée en été, lorsque l'air neuf est plus frais que l'air vicié. Dans cette hypothèse, les moyens de dérivation 60 sont commandés en position ouverte, de manière à établir une communication d'air entre la cavité d'admission d'air vicié 54 et le premier canal 40a. Pour ce faire, les moyens de dérivation 60 peuvent prendre la forme d'un simple volet actionnable à l'aide de moyens conventionnels. Lorsque ce volet est ouvert, le flux d'air vicié F1 présent dans la cavité d'admission d'air vicié 54 va naturellement emprunter le premier canal d'air 40a et contourner l'échangeur 20. En effet, du fait de la perte de charge au sein de l'échangeur, l'air prend préférentiellement le chemin aéraulique le moins consommateur d'énergie potentielle, à savoir le chemin du canal de contournement 40a. A partir de ce canal, le flux d'air vicié F1 pénètre dans la cavité d'évacuation d'air vicié 56 avant d'être extrait du système par le tube 86.

Aussi, dans cette configuration de fonctionnement, seul le flux d'air neuf F2 traverse l'échangeur d'une manière identique à celle exposée ci-dessous pour le fonctionnement en mode chauffage. Cela permet notamment de filtrer ce flux d'air neuf F2, lorsque l'échangeur est équipé de tels filtres.

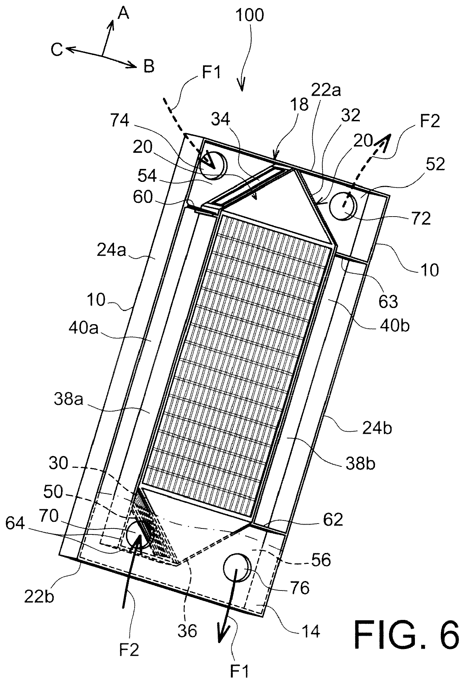

Selon un second mode de réalisation préféré de l'invention montré sur la figure 6, le boîtier extérieur 18 est équipé d'un autre organe d'obturation 63 s'étendant selon la direction C, et reliant les faces 24b, 38b en partie supérieure du système. Cet organe 63, qui prend la forme d'une simple paroi, permet de séparer la cavité de distribution d'air neuf 52 d'une seconde extrémité du second canal 40b. Dans ce second mode, l'ouverture 74 pour la distribution d'air neuf est alors pratiquée sur le premier capot 10 en débouchant dans la cavité de distribution d'air neuf 52, et non plus dans le second canal 40 agencé plus bas. Ce dernier est ainsi obturé à ses deux extrémités et participe donc à la création d'une zone tampon périphérique quasi-adiabatique, renforçant les performances énergétiques globales du système d'échangeur.

Dans ce second mode de réalisation préféré, les ouvertures 72 et 74 restent écartées l'une de l'autre selon la direction B, mais se situent sensiblement à la même hauteur selon la direction A. Pour éviter un court-circuit entre les deux flux d'air F1, F2, des diffuseurs (non représentés) peuvent être implantés avec des orientations adéquates, par exemple au niveau des tubes associés 82, 84, dans l'espace intérieur 103 du bâtiment.

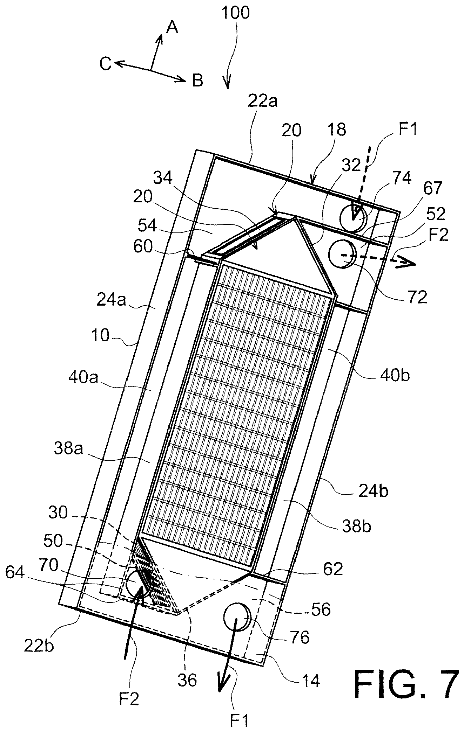

En référence à présent à la figure 7, il est représenté un troisième mode de réalisation préféré de l'invention, de conception proche de celle du second mode. La principale différence réside dans le fait que la cavité d'admission d'air vicié 54 n'est plus fermée par l'arête supérieure de l'échangeur 20, celle-ci étant à présent à distance et en regard de la face 22a, et non plus en appui sur cette dernière. Aussi, la cavité 54 contourne l'arête précitée et se poursuit par un canal qui protège la cavité de distribution d'air neuf 52, séparée du canal par une paroi 67. Cette paroi 67 s'étant donc parallèlement à la face 22a entre l'arête précitée de l'échangeur, et la face 24b sur laquelle elle est raccordée.

Dans ce troisième mode de réalisation, l'ouverture 74 pour l'admission d'air vicié se situe au bout du canal prolongeant la cavité 54, proche de la face 24b, en étant sensiblement alignée selon la direction A avec l'ouverture 72 pour la distribution d'air neuf.

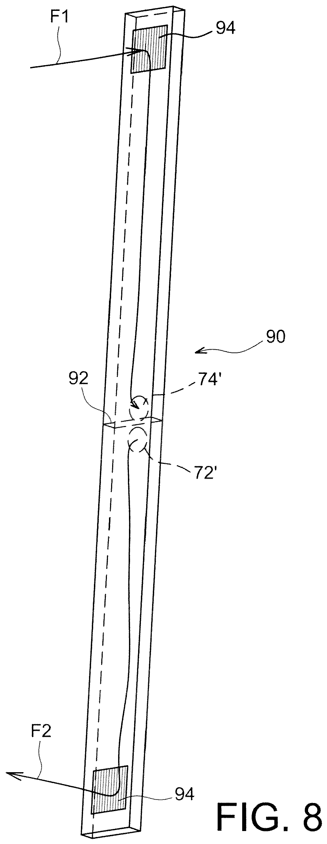

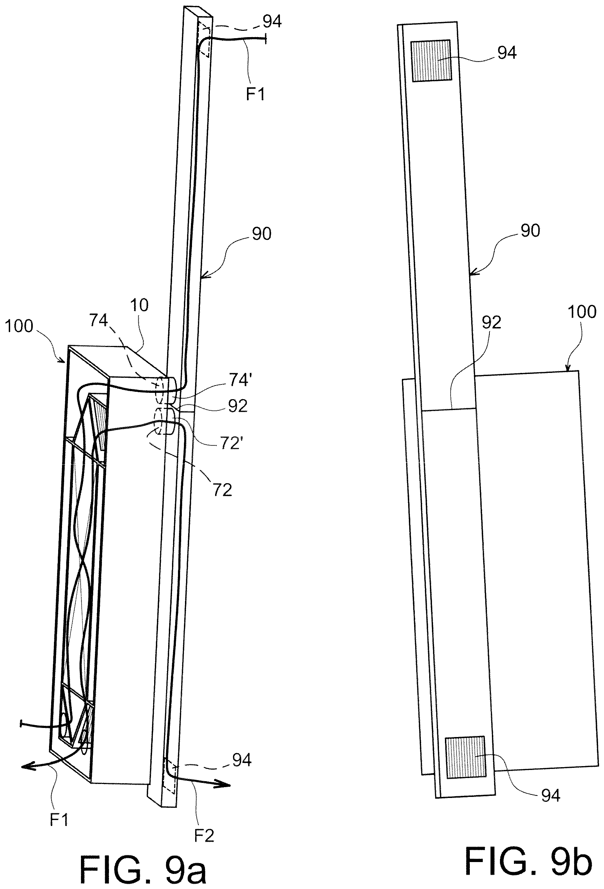

La proximité des deux ouvertures 72, 74 peut conduire à utiliser des déflecteurs dans la pièce, pour éviter un court-circuit entre l'air vicié et l'air neuf. Alternativement, il peut être utilisé une colonne ou rampe 90 montrée sur les figures 8, 9a et 9b. Cette colonne 90, orientée selon la direction A, peut localement se substituer à la cloison intérieure 6, ou être prévue en sus de celle-ci. Elle permet la distribution et la collecte de l'air, comme cela va être expliqué ci-après.

En effet, la colonne 90 comporte deux orifices complémentaires 72', 74' communiquant respectivement avec les ouvertures 72, 74 du système d'échangeur 100. Ces orifices 72', 74' débouchent respectivement dans deux compartiments séparés par une cloison 92, permettant la ségrégation entre les flux F1 et F2. Aux extrémités opposées de ces deux compartiments de la colonne 90, à savoir respectivement en haut et au bas de la pièce, il est prévu deux diffuseurs 94, 94 permettant le passage des flux F1 et F2. Ces derniers se trouvent alors écartés d'une distance correspondant presque à une hauteur de pièce, évitant ainsi un court-circuit.

Bien entendu, diverses modifications peuvent être apportées par l'homme du métier à l'invention qui vient d'être décrite, uniquement à titre d'exemples non limitatifs.

## Revendications

1. Système d'échangeur thermique (100) destiné à être intégré dans une paroi (101) d'un bâtiment, le système comprenant un boîtier extérieur (18) et un échangeur (20) à double flux d'air et à contre-courant logé dans ledit boîtier, l'échangeur comprenant une zone d'admission d'air neuf (30), une zone de distribution d'air neuf (32), une zone d'admission d'air vicié (34) et une zone d'évacuation d'air vicié (36), la zone d'admission d'air neuf et la zone d'évacuation d'air vicié se situant à une première extrémité de l'échangeur (20) selon une première direction (A) du système, en étant décalées l'une de l'autre selon une seconde direction (B) du système orthogonale à la première direction, et la zone d'admission d'air vicié ainsi que la zone de distribution d'air neuf se situant à une seconde extrémité de l'échangeur selon la première direction (A), en étant également décalées l'une de l'autre selon la seconde direction (B), le boîtier extérieur (18) comportant un premier et un second capots de fermeture (10, 14) opposés selon une troisième direction (C) du système, la troisième direction étant orthogonale aux première et seconde directions (A, B), le boîtier extérieur (18) comportant une cavité d'admission d'air vicié (54) délimitée en partie par la zone d'admission d'air vicié (34), une cavité d'admission d'air neuf (50) délimitée en partie par la zone d'admission d'air neuf (30), une cavité de distribution d'air neuf (52) délimitée en partie par la zone de distribution d'air neuf (32), et une cavité d'évacuation d'air vicié (56) délimitée en partie par la zone d'évacuation d'air vicié (36), le premier capot de fermeture (10) comprenant une ouverture (74) pour l'admission d'air vicié débouchant dans la cavité d'admission d'air vicié (54) ainsi qu'une ouverture (72) pour la distribution d'air neuf communiquant avec la cavité de distribution d'air neuf (52), le second capot de fermeture (14) comprenant une ouverture (70) pour l'admission d'air neuf débouchant dans la cavité d'admission d'air neuf (50) ainsi qu'une ouverture (76) pour l'évacuation d'air vicié débouchant dans la cavité d'évacuation d'air vicié (56), le boîtier extérieur (18) comportant à sa périphérie, un premier canal d'air (40a) s'étendant autour de l'échangeur (20) entre la cavité d'admission d'air vicié (54) et la cavité d'évacuation d'air vicié (56) dans laquelle il débouche, le premier canal d'air (40a) contournant extérieurement la cavité d'admission d'air neuf (50) et étant séparé de la cavité d'admission d'air vicié (54) par des moyens commandables (60) de dérivation de l'air situé dans cette même cavité (54), le système (100) présentant une épaisseur, selon la troisième direction (C), inférieure ou égale à 20 cm.

2. Système d'échangeur thermique selon la revendication 1, **caractérisé en ce que** le boîtier extérieur (18) comporte, à sa périphérie, un second canal d'air (40b) s'étendant selon la première direction (A) le long de l'échangeur (20), un organe d'obturation (62) séparant la cavité d'évacuation d'air vicié (56) d'une première extrémité du second canal (40b).

3. Système d'échangeur thermique selon la revendication 2, **caractérisé en ce qu'**une seconde extrémité du second canal d'air (40b) débouche dans la cavité de distribution d'air neuf (52), et **en ce que** l'ouverture (72) pour la distribution d'air neuf est pratiquée sur le premier capot de fermeture (10) du boîtier extérieur en débouchant au niveau de la première extrémité du second canal d'air (40b), afin que l'ouverture (72) pour la distribution d'air neuf et l'ouverture (74) pour l'admission d'air vicié soient écartées l'une de l'autre selon ladite première direction (A).

4. Système d'échangeur thermique selon la revendication 2, **caractérisé en ce qu'**un autre organe d'obturation (63) sépare la cavité de distribution d'air neuf (52) d'une seconde extrémité du second canal d'air (40b), et **en ce que** l'ouverture (72) pour la distribution d'air neuf est pratiquée sur le premier capot de fermeture (10) du boîtier extérieur en débouchant dans la cavité de distribution d'air neuf (52).

5. Système d'échangeur thermique selon l'une quelconque des revendications précédentes, **caractérisé en ce que** le boîtier extérieur (18) présente une forme globale de parallélépipède rectangle.

6. Système d'échangeur thermique selon l'une quelconque des revendications précédentes, **caractérisé en ce que** la première direction (A) correspond à une direction de la hauteur de la paroi (101).

7. Système d'échangeur thermique selon l'une quelconque des revendications précédentes, **caractérisé en ce que** l'échangeur (20) présente une forme globale de prisme hexagonal, régulier ou irrégulier, quatre des six faces rectangulaires du prisme constituant respectivement la zone d'admission d'air neuf (30), la zone de distribution d'air neuf (32), la zone d'admission d'air vicié (34) et la zone d'évacuation d'air vicié (36), et **en ce que** l'échangeur (20) est préférentiellement agencé dans le boîtier extérieur (18) de façon à ce que les deux autres faces rectangulaires (38a, 38b) du prisme soient parallèles à ladite première direction (A).

8. Système d'échangeur thermique selon l'une quelconque des revendications précédentes, **caractérisé en ce que** chacune des cavité d'admission d'air vicié (54), cavité d'admission d'air neuf (50), cavité de distribution d'air neuf (52) et cavité d'évacuation d'air vicié (56) s'étendent sur sensiblement toute l'épaisseur (E1) du système selon la troisième direction (C), en étant délimitées par lesdits premier et second capots de fermeture (10, 14).

9. Système d'échangeur thermique selon l'une quelconque des revendications précédentes, **caractérisé en ce que** l'échangeur (20) est un échangeur enthalpique permettant un transfert thermique et un transfert d'humidité entre les deux flux d'air.

10. Système d'échangeur thermique selon l'une quelconque des revendications précédentes, **caractérisé en ce qu'**il comporte des tubes (84, 82, 80, 86) agencés orthogonalement au premier et second capots de fermeture (10, 14) et raccordés respectivement sur l'ouverture pour l'admission d'air vicié (74), l'ouverture pour la distribution d'air neuf (72), l'ouverture pour l'admission d'air neuf (70) ainsi que l'ouverture pour l'évacuation d'air vicié (76).

11. Système d'échangeur thermique selon l'une quelconque des revendications précédentes, **caractérisé en ce que** l'échangeur (20) est un échangeur à plaques ou à plaques et à ailettes.

12. Paroi (101) de bâtiment comprenant au moins un système d'échangeur (100) selon l'une quelconque des revendications précédentes.

13. Paroi selon la revendication précédente, **caractérisée en ce qu'**elle comprend une cloison extérieure (4) et une cloison intérieure (6) entre lesquelles est défini un espace (2) dans lequel est logé ledit au moins un système d'échangeur (100), une couche d'isolation thermique (8, 12) étant préférentiellement interposée entre la cloison intérieure (6) et le premier capot (10) du système d'échangeur (100), et entre la cloison extérieure (4) et le second capot (14) de ce même système.

14. Bâtiment (102) comprenant au moins une paroi (101) selon la revendication 12 ou la revendication 13, ladite paroi étant préférentiellement une paroi de rénovation.

## Patentansprüche

1. Wärmetauschersystem (100), das dazu bestimmt ist, in eine Wand (101) eines Gebäudes integriert zu werden, wobei das System ein Außengehäuse (18) und einen Doppel-Luftstrom- und Gegenstromwärmetauscher (20) enthält, der im Gehäuse aufgenommen ist, wobei der Wärmetauscher einen Frischlufteinlassbereich (30), einen Frischluftverteilungsbereich (32), einen Ablufteinlassbereich (34) und einen Abluftauslassbereich (36) enthält, wobei der Frischlufteinlassbereich und der Abluftauslassbereich sich an einem ersten Ende des Wärmetauschers (20) in einer ersten Richtung (A) des Systems befinden und dabei in einer zweiten Richtung (B) des Systems orthogonal zur ersten Richtung zueinander versetzt sind, und wobei der Ablufteinlassbereich und der Frischluftverteilungsbereich sich an einem zweiten Ende des Wärmetauschers in der ersten Richtung (A) befinden und dabei auch in der zweiten Richtung (B) zueinander versetzt sind,
wobei das Außengehäuse (18) eine erste und zweite Schließkappe (10, 14) enthält, die in einer dritten Richtung (C) des Systems entgegengesetzt liegen, wobei die dritte Richtung orthogonal zu der ersten und zweiten Richtung (A, B) verläuft,
wobei das Außengehäuse (18) einen Ablufteinlasshohlraum (54) aufweist, der teilweise durch den Ablufteinlassbereich (34) begrenzt ist, sowie einen Frischlufteinlasshohlraum (50), der teilweise durch den Frischlufteinlassbereich (30) begrenzt ist, einen Frischluftverteilungshohlraum (52), der teilweise durch den Frischluftverteilungsbereich (32) begrenzt ist, und einen Abluftauslasshohlraum (56), der teilweise durch den Abluftauslassbereich (36) begrenzt ist,
wobei die erste Schließkappe (10) eine in den Ablufteinlasshohlraum (54) mündende Öffnung (74) für den Einlass von Abluft und eine mit dem Frischluftverteilungshohlraum (52) kommunizierende Öffnung (72) für die Verteilung von Frischluft aufweist, wobei die zweite Schließkappe (14) eine in den Frischlufteinlasshohlraum (50) mündende Öffnung (70) für den Einlass von Frischluft und eine in den Abluftauslasshohlraum (56) mündende Öffnung (76) für den Auslass von Abluft aufweist,
wobei das Außengehäuse (18) an seinem Umfang einen ersten Luftkanal (40a) enthält, der sich um den Wärmetauscher (20) herum zwischen dem Ablufteinlasshohlraum (54) und dem Abluftauslasshohlraum (56) erstreckt, in welchen er hineinmündet, wobei der erste Luftkanal (40a) außen den Frischlufteinlasshohlraum (50) umgeht und von dem Ablufteinlasshohlraum (54) über steuerbare Mittel (60) zum Umleiten der in diesem Hohlraum (54) befindlichen Luft getrennt ist,
wobei das System (100) in der dritten Richtung (C) eine Dicke kleiner oder gleich 20 cm aufweist.

2. Wärmetauschersystem nach Anspruch 1,
**dadurch gekennzeichnet, dass**
das Außengehäuse (18) an seinem Umfang einen zweiten Luftkanal (40b) enthält, der sich in der ersten Richtung (A) entlang des Wärmetauschers (20) erstreckt, wobei ein Verschlussorgan (62) den Abluftauslasshohlraum (56) von einem ersten Ende des zweiten Kanals (40b) trennt.

3. Wärmetauschersystem nach Anspruch 2,
**dadurch gekennzeichnet, dass**
ein zweites Ende des zweiten Luftkanals (40b) in den Frischluftverteilungshohlraum (52) mündet, und dass
die Öffnung (72) zur Verteilung von Frischluft an der ersten Schließkappe (10) des Außengehäuses ausgeführt ist und dabei im Bereich des ersten Endes des zweiten Luftkanals (40b) ausmündet, damit die Öffnung (72) zur Frischluftverteilung und die Öffnung (74) zum Ablufteinlass in der ersten Richtung (A) voneinander beabstandet sind.

4. Wärmetauschersystem nach Anspruch 2,
**dadurch gekennzeichnet, dass**
ein weiteres Verschlussorgan (63) den Frischluftverteilungshohlraum (52) von einem zweiten Ende des zweiten Luftkanals (40b) trennt, und dass
die Öffnung (72) zur Frischluftverteilung in der ersten Schließkappe (10) des Außengehäuses ausgeführt ist und dabei in den Frischluftverteilungshohlraum (52) mündet.

5. Wärmetauschersystem nach einem der vorangehenden Ansprüche,
**dadurch gekennzeichnet, dass**
das Außengehäuse (18) insgesamt eine Rechteckquaderform aufweist.

6. Wärmetauschersystem nach einem der vorangehenden Ansprüche,
**dadurch gekennzeichnet, dass**
die erste Richtung (A) einer Höhenrichtung der Wand (101) entspricht.

7. Wärmetauschersystem nach einem der vorangehenden Ansprüche,
**dadurch gekennzeichnet, dass**
der Wärmetauscher (20) insgesamt in Form eines gleichmäßigen oder ungleichmäßigen hexagonalen Prismas vorliegt, wobei vier der sechs rechteckigen Seiten des Prismas den Frischlufteinlassbereich (30), den Frischluftverteilungsbereich (32), den Ablufteinlassbereich (34) bzw. den Abluftauslassbereich (36) bilden, und dass
der Wärmetauscher (20) vorzugsweise in dem Außengehäuse (18) so angeordnet ist, dass die beiden weiteren rechteckigen Seiten (38a, 38b) des Prismas parallel zur ersten Richtung (A) verlaufen.

8. Wärmetauschersystem nach einem der vorangehenden Ansprüche,
**dadurch gekennzeichnet, dass**
jeder aus Ablufteinlasshohlraum (54), Frischlufteinlasshohlraum (50), Frischluftverteilungshohlraum (52) und Abluftauslasshohlraum (56) sich im Wesentlich über die gesamte Dicke (E1) des Systems in der dritten Richtung (C) erstreckt und dabei von der ersten und der zweiten Schließkappe (10, 14) begrenzt wird.

9. Wärmetauschersystem nach einem der vorangehenden Ansprüche,
**dadurch gekennzeichnet, dass**
der Wärmetauscher (20) ein Enthalpietauscher ist, der einen Wärmetransfer und einen Feuchtigkeitstransfer zwischen den beiden Luftströmen ermöglicht.

10. Wärmetauschersystem nach einem der vorangehenden Ansprüche,
**dadurch gekennzeichnet, dass**
es Rohre (84, 82, 80, 86) enthält, die orthogonal zur ersten und zweiten Schließkappe (10, 14) angeordnet und an die Öffnung zum Ablufteinlass (74), an die Öffnung zur Frischluftverteilung (72), an die Öffnung zum Frischlufteinlass (70) bzw. an die Öffnung zum Abluftauslass (76) angeschlossen sind.

11. Wärmetauschersystem nach einem der vorangehenden Ansprüche,
**dadurch gekennzeichnet, dass**
der Wärmetauscher (20) ein Platten- oder Platten- und Rippentauscher ist.

12. Gebäudewand (101), enthaltend zumindest ein Wärmetauschersystem (100) nach einem der vorangehenden Ansprüche.

13. Gebäudewand nach dem vorangehenden Anspruch,
**dadurch gekennzeichnet, dass**
sie eine äußere Trennwand (4) und eine innere Trennwand (6) enthält, zwischen denen ein Raum (2) definiert ist, in welchem das zumindest eine Wärmetauschersystem (100) aufgenommen ist, wobei vorzugsweise eine Wärmedämmschicht (8, 12) zwischen der inneren Trennwand (6) und der ersten Kappe (10) des Wärmetauschersystems (100) und zwischen der äußeren Trennwand (4) und der zweiten Kappe (14) dieses Systems eingefügt ist.

14. Gebäude (102), enthaltend zumindest eine Gebäudewand (101) nach Anspruch 12 oder Anspruch 13, wobei die Gebäudewand vorzugsweise eine Sanierungswand ist.

## Claims

1. Heat exchanger system (100) intended to be built into a wall (101) of a building, the system comprising an external housing (18) and a double air flow countercurrent exchanger (20) housed in said housing, the exchanger comprising a fresh air intake zone (30), a fresh air distribution zone (32), a stale air intake zone (34) and a stale air discharge zone (36), the fresh air intake zone and the stale air discharge zone situated at a first end of the exchanger (20) along a first direction (A) of the system, by being offset from one another along a second direction (B) of the system orthogonal to the first direction, and the stale air intake zone as well as the fresh air distribution zone situated at a second end of the exchanger along the first direction (A), by also being offset from one another along the second direction (B),
the external housing (18) comprising an opposite first and a second closure covers (10, 14) along a third direction (C) of the system, with the third direction being orthogonal to the first and second directions (A, B),
the external housing (18) comprising a stale air intake cavity (54) partially delimited by the stale air intake zone (34), a fresh air intake cavity (50) partially delimited by the fresh air intake zone (30), a fresh air distribution cavity (52) partially delimited by the fresh air distribution zone (32), and a stale air discharge cavity (56) partially delimited by the stale air discharge zone (36),
the first closure cover (10) comprising an opening (74) for the intake of stale air opening into the stale air intake cavity (54) as well as an opening (72) for the distribution of fresh air communicating with the fresh air distribution cavity (52), the second closure cover (14) comprising an opening (70) for the intake of fresh air opening into the fresh air intake cavity (50) as well as an opening (76) for the discharging of stale air opening into the stale air discharge cavity (56),
the external housing (18) comprising at its periphery, a first air duct (40a) extending around the exchanger (20) between the stale air intake cavity (54) and the stale air discharge cavity (56) into which it opens, the first air duct (40a) passing externally around the fresh air intake cavity (50) and being separated from the stale air intake cavity (54) by controllable means (60) of diverting the air situated in this same cavity (54),
the system (100) having a thickness, along the third direction (C), less than or equal to 20 cm.

2. Heat exchanger system according to claim 1, **characterised in that** the external housing (18) comprises, at its periphery, a second air duct (40b) extending along the first direction (A) along the exchanger (20), a closure member (62) that separates the stale air discharge cavity (56) from a first end of the second canal (40b).

3. Heat exchanger system according to claim 2, **characterised in that** a second end of the second air duct (40b) opens into the fresh air distribution cavity (52), and **in that** the opening (72) for the distribution of fresh air is made on the first closure cover (10) of the external housing by opening on the first end of the second air duct (40b), so that the opening (72) for the distribution of fresh air and the opening (74) for the intake of stale air are separated from one another along said first direction (A).

4. Heat exchanger system according to claim 2, **characterised in that** another closure member (63) separates the fresh air distribution cavity (52) from a second end of the second air duct (40b), and **in that** the opening (72) for the distribution of fresh air is made on the first closure cover (10) of the external housing by opening into the fresh air distribution cavity (52).

5. Heat exchanger system according to any preceding claim, **characterised in that** the external housing (18) has a generally rectangle parallelepiped shape.

6. Heat exchanger system according to any preceding claim, **characterised in that** the first direction (A) corresponds to a direction of the height of the wall (101).

7. Heat exchanger system according to any preceding claim, **characterised in that** the exchanger (20) has the general shape of a hexagonal prism, regular or irregular, with four of the six rectangular faces of the prism respectively forming the fresh air intake zone (30), the fresh air distribution zone (32), the stale air intake zone (34) and the stale air discharge zone (36), and **in that** the exchanger (20) is preferably arranged in the external housing (18) in such a way that the two other rectangular faces (38a, 38b) of the prism are parallel to said first direction (A).

8. Heat exchanger system according to any preceding claim, **characterised in that** each one of the stale air intake cavity (54), fresh air intake cavity (50), fresh air distribution cavity (52) and stale air discharge cavity (56) extend over substantially the entire thickness (E1) of the system along the third direction (C), by being delimited by said first and second closure covers (10, 14).

9. Heat exchanger system according to any preceding claim, **characterised in that** the exchanger (20) is an enthalpy exchanger allowing for a thermal transfer and a transfer of humidity between the two air flows.

10. Heat exchanger system according to any preceding claim, **characterised in that** it comprises tubes (84, 82, 80, 86) arranged orthogonally to the first and second closure covers (10, 14) and respectively connected on the opening for the intake of stale air (74), the opening for the distribution of fresh air (72), the opening for the intake of fresh air (70) as well as the opening for the discharging of stale air (76).

11. Heat exchanger system according to any preceding claim, **characterised in that** the exchanger (20) is a plate changer or a plate and fin changer.

12. Wall (101) of a building comprising at least one exchanger system (100) according to any preceding claim.

13. Wall according to the preceding claim, **characterised in that** it comprises an external partition (4) and an internal partition (6) between which is defined a space (2) wherein is housed said at least one exchanger system (100), a layer of thermal insulation (8, 12) being preferable inserted between the internal partition (6) and the first cover (10) of the exchanger system (100), and between the external partition (4) and the second cover (14) of this same system.

14. Building (102) comprising at least one wall (101) according to claim 12 or claim 13, said wall being preferably a renovation wall.
